# EUROPÄISCHE PATENTSCHRIFT

(11) **EP 2 950 007 B1**
(45) Veröffentlichungstag und Bekanntmachung des Hinweises auf die Patenterteilung: **16.08.2017**
(21) Anmeldenummer: 15169457.7
(22) Anmeldetag: 27.05.2015
(51) Int. Cl.: F24D 17/00, F24D 19/10, F16K 31/122

(54) **ANLAGE FÜR DAS ERWÄRMEN VON BRAUCHWASSER**
DEVICE FOR HEATING WATER
DISPOSITIF POUR LE CHAUFFAGE D'EAU

(30) Priorität: 28.05.2014 AT 503772014; 07.07.2014 AT 504732014
(43) Veröffentlichungstag der Anmeldung: 02.12.2015
(73) Patentinhaber: SOLARFOCUS Holding GmbH, 4451 Garsten (AT)
(72) Erfinder: Kalkgruber, Johann, 4421 Aschach an der Steyr (AT); Großauer, Johann, 4421 Aschach an der Steyr (AT); Hinterplattner, Johann, 4423 Neuzeug (AT)
(74) Vertreter: Burgstaller, Peter

(56) Entgegenhaltungen:
- EP-A2- 2 407 663
- FR-A1- 2 578 034
- GB-A- 2 493 222

## Beschreibung

Die Erfindung betrifft eine Anlage für das Erwärmen von Brauchwasser und Bereitstellen von warmem Brauchwasser.

EP 2407663 A2 beschreibt unter anderem eine Anlage für das Bereitstellen von Brauchwasser. Das zu erwärmende, ursprünglich kalte Brauchwasser wird durch einen Wärmetauscher und eine Turbine zum Brauchwasserhahn geführt. Im Wärmetauscher wird es durch heißes Wasser erwärmt, welches durch die Wirkung einer Pumpe durch den Wärmetauscher und einen Pufferwärmespeicher hindurch im Kreis gepumpt wird. Die Pumpe des Pufferkreislaufes wird durch jene Turbine angetrieben, welche durch den Fluss des Brauchwassers angetrieben wird, sobald Brauchwasser entnommen wird. Damit wird erreicht, dass der Fluss im Pufferkreislauf im Wesentlichen proportional zum Fluss des zu erwärmenden Brauchwassers ist, sodass das Brauchwasser im Wärmetauscher unabhängig von der Größe des Flusses um eine konstante Temperaturdifferenz erwärmt wird. Diese Regelung kommt ohne zugeführte elektrische Energie aus. Die in der EP 2407663 A2 beschriebene spezielle Turbine weist eine Steuervorrichtung auf, durch welche zumindest bei kleinen Flüssen der Fließquerschnitt für das die Turbine durchströmende Wasser, am Zufluss zur Turbinenkammer verengbar wird, wenn der Fluss durch die Turbine verkleinert wird. Damit wird erreicht, dass der Impuls des Flusses pro Fluss bei kleinen Flüssen erhöht wird, was in weiterer Folge bewirkt, dass die Turbine auch bei relativ kleinen Flüssen noch läuft und nicht stehen bleibt.

Es ist üblich im Pufferkreislauf ein Rückschlagventil vorzusehen, welches Fluss von Wasser im Pufferkreislauf entgegen der vorgesehen Kreisrichtung verhindert. Auf Grund dessen, dass ein Rückschlagventil auch in Vorwärtsrichtung erst ab einer kleinen Druckdifferenz - typischerweise wenige mbar - öffnet, verhindert das Rückschlagventil auch, dass es bei ausgeschalteter Pumpe im Pufferkreislauf zu dann ungewollter Zirkulation in "Vorwärtsrichtung" kommt. Derartige Zirkulation wäre sehr nachteilig, da dadurch Wärme aus dem Pufferspeicher ungenutzt verloren ginge.

Im Widerspruch zu der beschriebenen Funktionsweise musste in der Praxis der unerwünschte Effekt festgestellt werden, dass dann wenn der Wasserhahn für Brauchwasser von der geschlossenen in eine nur wenig geöffnete Stellung übergeführt wird, das fließende Brauchwasser zu wenig erwärmt wird.

Die der Erfindung zu Grunde liegende Aufgabe besteht darin, den beschriebenen unerwünschten Effekt zu vermeiden.

Für das Lösen der Aufgabe wird erfindungsgemäß vorgeschlagen, im Pufferkreislauf anstatt des oben besprochenen Rückschlagventils ein Ventil vorzusehen dessen Öffnungszustand von dem an einem Steuereingang anliegenden Druck abhängig ist und an den Steuereingang den Druck in der Brauchwasserleitung nach dem Druckabbau an der Turbine anzulegen.

Dem Lösungsvorschlag liegt die Erkenntnis zu Grunde, dass der bei Bauweisen entsprechend dem Stand der Technik auftretende Effekt des mangelnden Erwärmens von Brauchwasser bei kleinem Brauchwasserfluss zu einem erheblichen Anteil darauf beruht, dass bei kleinem Brauchwasserfluss der Antrieb der Turbine nicht ausreichend stark ist, um die Pumpe im Pufferkreislauf so stark anzutreiben, dass das in Bauweisen gemäß dem Stand der Technik vorgesehene Rückschlagventil im Pufferkreislauf geöffnet wird. Durch die erfindungsgemäße Bauweise wird das Ventil im Pufferkreislauf schon beim Druckabfall in der Brauchwasserleitung geöffnet und nicht erst dann wenn Turbine und Pumpe den Pufferkreislauf stark antreiben.

Die Erfindung wird an Hand von Zeichnungen veranschaulicht.
- Fig. 1 :: zeigt einen Fließplan einer beispielhaften erfindungsgemäßen Vorrichtung.
- Fig. 2:: zeigt in Schnittansicht eine beispielhafte Bauweise für ein in einer erfindungsgemäßen Vorrichtung anwendbares Ventil dessen Öffnungszustand von dem an einem Steuereingang anliegenden Druck abhängig ist.
- Fig. 3:: zeigt in Schnittansicht stilisiert eine beispielhafte Turbine, welche vorteilhaft bei der erfindungsgemäßen Vorrichtung eingesetzt werden kann. Die Blickrichtung liegt dabei parallel zur Achse des Schaufelrades.

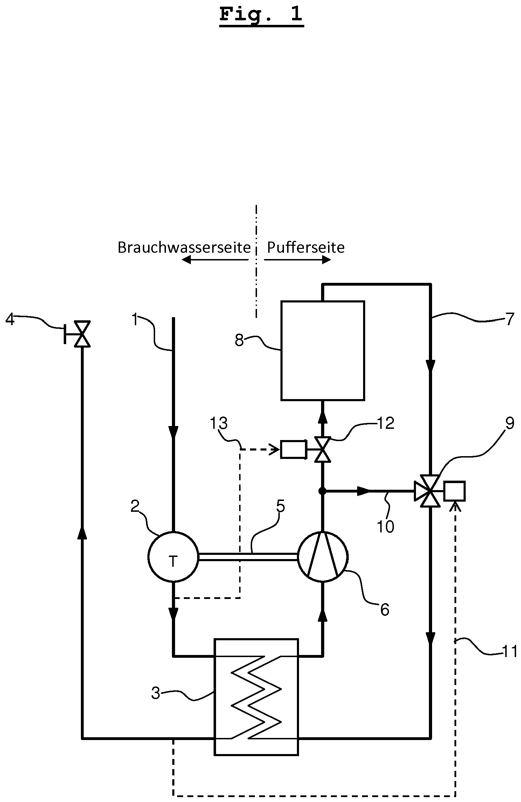

Im Fließplan gemäß Fig. 1 ist warmes Brauchwasser an dem Wasserhahn 4 entnehmbar. Dazu wird kaltes, unter Druck stehendes Brauchwasser in dem zur Turbine 2 führenden Brauchwasserleitungsbereich 1 bereitgestellt, durch die Turbine 2 hindurch geführt, in weiterer Folge durch den Wärmetauscher 3 hindurch geführt und schließlich an den Wasserhahn 4 geführt.

Im Wärmetauscher 3 wird das Brauchwasser erwärmt, indem es an eine Seite eines wärmeleitenden flächigen Körpers geführt wird, an dessen anderer Seite heißes Wasser aus eines Pufferkreislaufes geführt wird. Der Pufferkreislauf führt durch den Wärmetauscher 3, durch die Pumpe 6, welche bestimmungsgemäß den Fluss im Pufferkreislauf antreibt und durch den Pufferwärmespeicher 8 in welchem das Wasser des Pufferkreislaufes wie auch immer erwärmt wird.

Damit die Temperatur des zu entnehmenden Brauchwassers unabhängig davon geregelt werden kann, wie hoch die Temperatur des Wassers im Pufferwärmespeicher 8 ist, so lange die Temperatur des Wassers im Pufferwärmespeicher nur über einer gewissen Mindesttemperatur liegt, ist ein Mischventil 9 vorgesehen. Das Mischventil 9 mischt einen zu ihm über die Leitung 7 von Pufferwärmespeicher 8 kommenden Wasserfluss mit einem zu ihm über die Leitung 10 von der Pumpe 6 kommenden Wasserfluss der nach dem Wärmetauscher 3 nicht durch den Pufferwärmespeicher 8 geführt wurde, zu einem Fluss zusammen, der wieder in den Wärmetauscher 3 hinein geführt wird. Das Mischverhältnis ist abhängig von der Temperatur des zu entnehmenden Brauchwassers. Die Temperatur des Brauchwassers kann dazu über ein Kapillarrohr-Fernthermometer 11 auf den Steuereingang des Mischventils 9 wirken.

Sobald der Wasserhahn 4 geöffnet wird, fließt Brauchwasser daraus, die Turbine 2 wird durch den Brauchwasserfluss angetrieben und an der Turbine 2 kommt es zu einem Druckabfall des Brauchwassers. Das heißt im Brauchwasserleitungsbereich 1 herrscht dann ein größerer Druck als in jenem Brauchwasserleitungsbereich welcher zwischen der Turbine 2 und dem Wasserhahn 4 liegt. Wenn der Wasserhahn 4 geschlossen ist herrscht in dem letztgenannten Brauchwasserleitungsbereich der gleiche Druck wie in dem zur Turbine 2 führenden Brauchwasserleitungsbereich 1.

Der Druck, welcher in dem zwischen Turbine 2 und Wasserhahn 4 befindlichen Brauchwasserleitungsbereich vorliegt und welcher davon abhängig ist ob der Wasserhahn 4 geschlossen oder geöffnet ist, wird als Steuergröße für das Ventil 12 verwendet, dessen Öffnungszustand von dem an seinem Steuereingang anliegenden Druck abhängig ist. Die Abhängigkeit ist derart, dass dann, wenn der Druck in dem von der Turbine flussabwärts liegenden Brauchwasserleitungsbereich unter den - im wesentlichen konstanten - Druck in dem zur Turbine 2 führenden Brauchwasserleitungsbereich 1 sinkt, das Ventil 12 geöffnet wird.

Wenn der Druck in dem von der Turbine flussabwärts liegenden Brauchwasserleitungsbereich gleich groß wird wie der Druck in dem zur Turbine 2 führenden Brauchwasserleitungsbereich 1, wird das Ventil 12 geschlossen.

Prinzipiell ist für das Funktionieren der Anlage wichtig, dass die Stellung des Ventils 12 in Abhängigkeit von dem Unterschied des Drucks im Brauchwasserleitungsbereich 1, welcher zur Turbine 2 führt zu dem Druck im Brauchwasserleitungsbereich nach dem Druckabbau an der Turbine 2, gesteuert wird. Wenn man davon ausgehen kann, dass der Druck im Brauchwasserleitungsbereich 1 von Seiten des Wasseranbieters her gut konstant gehalten wird, reicht es aus, nur den nach dem Druckabbau an der Turbine 2 vorliegenden Druck an das Ventil 12 heranzuführen - über die Steuerleitung 13 - und den Druck im Brauchwasserleitungsbereich 1 durch eine Einstellung im Ventil 12 "zu simulieren".

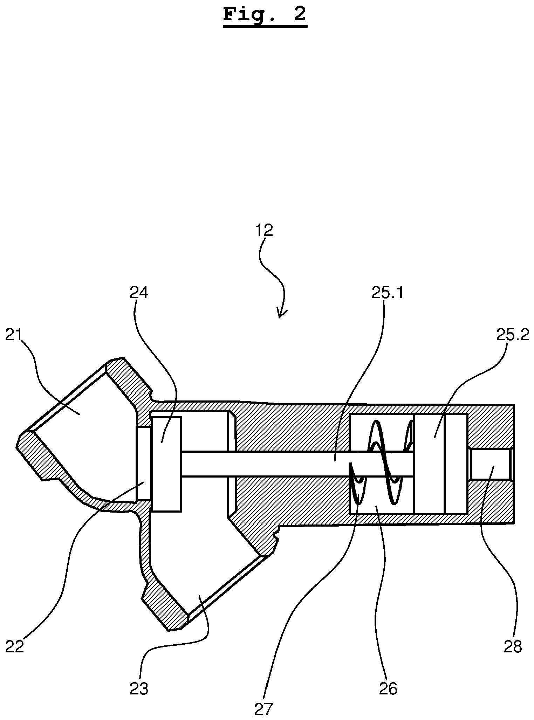

In Fig. 2 ist eine dazu passende beispielhafte Bauweise eines Ventils 12 skizziert:
Das Gehäuse des Ventils 12 weist eine Zuflussöffnung 21 und eine Abflussöffnung 23 auf, zwischen denen ein Kanal verläuft welcher durch eine Durchtrittsöffnung 22 hindurch verläuft, an deren Ränder ein gegenüber dem Gehäuse verschiebbarer Ventildeckel 24 anpressbar ist bzw. davon weg bewegbar ist, sodass damit die Durchtrittsöffnung verschlossen bzw. geöffnet wird. Der Ventildeckel ist mit dem Ende einer am Gehäuse linear verschiebbar geführt gehalten Kolbenstange 25.1 verbunden, die am anderen Ende einen Kolben 25.2 aufweist, welcher in einer Zylinderkammer 26 verschiebbar gelagert ist. Die Zylinderkammer 26 wird durch den Kolben 25.2 in zwei Teilkammern aufgeteilt. An die von der Kolbenstange 25.1 abgewandt liegende Teilkammer der Zylinderkammer 26 wird über die Öffnung 28 bestimmungsgemäß der Druck der Brauchwasserleitung nach der Stelle des Druckabfalls an der Turbine 2 angelegt. Gemäß Fig. 1 geschieht dies indem die Steuerleitung 13 als Rohr- oder Schlauchleitung die Öffnung 28, welche somit den Steuereingang des Ventils 12 darstellt, mit dem besagten flussabwärts von der Turbine liegenden Bereich der Brauchwasserleitung verbindet. Wenn der Druck in dem besagten Brauchwasserleitungsbereich ausreichend hoch ansteigt, wird der Kolben 25.2 und mit diesem der Ventildeckel 24 in Richtung auf die Durchtrittsöffnung 22 hin verschoben und dadurch der Ventildeckel 24 an den umlaufenden Rand dieser Durchtrittsöffnung gedrückt und damit das Ventil 12 geschlossen.

An der Kolbenstangenseite ist der Kolben 25.2 durch eine Druckfeder 27 gegen das Gehäuse des Ventils hin abgestützt. Diese Druckfeder 27 übt auf den Kolben 25.2 eine Kraft aus, die von der Durchtrittsöffnung 22 weg ausgerichtet ist. Wenn der Druck in der von der Kolbenstange 25.1 abgewandt liegenden Teilkammer der Zylinderkammer 26 so sehr abfällt, dass die durch den Druck auf den Kolben 25.2 ausgeübte Kraft kleiner ist als die durch die Druckfeder 27 auf den Kolben 25.2 ausgeübte Kraft, wird der Kolben und mit diesem der Ventildeckel 24 von der Durchtrittsöffnung 22 weg verschoben und damit das Ventil 12 geöffnet.

In einer Abwandlung zu dem in Fig. 2 skizzierten Ventil 12 kann die Druckfeder 27 weggelassen werden und der Wasserdruck, welcher im Brauchwasserleitungsbereich 1 vorliegt, durch eine weitere Steuerleitung in die betreffende Teilkammer der Zylinderkammer 26 geleitet werden. Das Ventil ist dann ebenso für die erfindungsgemäße Vorrichtung einsetzbar und wird dann durch den tatsächlichen Differenzdruck zwischen den Brauchwasserleitungsbereichen vor und nach der Turbine 2 geschaltet.

Es ist sehr vorteilhaft, in der Turbine 2 eine Steuervorrichtung vorzusehen, durch welche der Fließquerschnitt für Fluss von Brauchwasser durch die Turbine dann lokal verengt wird, wenn der Fluss von Brauchwasser (also die Menge Wasser, die pro Zeit eine Fließquerschnittsfläche durchströmt) verkleinert wird. Damit wird unter anderem erreicht, dass auch bei sehr kleinen Brauchwasserflüssen an der Turbine ein merklicher Druckabfall erfolgt und damit das Ventil 12 sicher rasch geöffnet wird. Die Pumpe 6, welche bestimmungsgemäß den Pufferkreislauf antreibt wird ihrerseits durch die Turbine 2 angetrieben, beispielsweise über eine gemeinsame Welle 5.

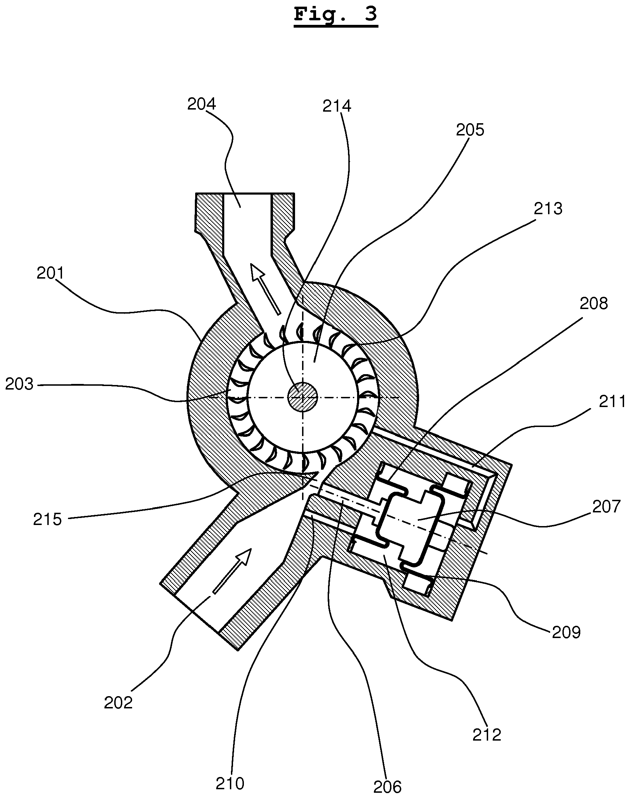

In Fig. 3 ist eine besonders bevorzugte Turbine 2 gezeigt, welche selbstregulierend ist und daher mit der gegenständlichen Erfindung insbesondere vorteilhaft kombinierbar ist, da diese ebenso wie das Ventil 12 autark also ohne Elektrizität arbeitet. Als selbstregulierende Turbine kann insbesondere eine Turbine gemäß der EP 2407663 A2 Verwendung finden. Die in Folge zur Fig. 3 beschriebene Turbine 2 weist einige Detailverbesserungen zusätzlich zur in der EP 2407663 A2 offenbarten Turbine auf.

Nur aus Gründen der Anschaulichkeit sind - im Widerspruch zur tatsächlichen Realisierbarkeit - in Fig. 3 alle im Betrieb gegeneinander nicht bewegten Teile der erfindungsgemäßen Vorrichtung zu einem einzigen monolithischen Teil zusammengefasst dargestellt, welcher hier weiters als Gehäuse 201 bezeichnet wird.

Für Fachleute auf dem Gebiet des Baues von Turbinen und Ähnlichem ist es einfach aus dieser stilisierten Darstellungsweise auf tatsächlich realisierbare - aus mehreren Einzelteilen zusammenzusetzende - Bauweise herzuleiten.

Das Gehäuse 201 weist eine Turbinenkammer 203 auf, in welcher ein Schaufelrad 205 mittels seiner zentralen Welle 214 drehbar gelagert gehalten ist. Für den Fluss von flüssigem Medium führt ein Zuflusskanal 202 in die Turbinenkammer 203 hinein und ein Abflusskanal 204 aus der Turbinenkammer 203 heraus.

Auch das Schaufelrad 205 ist etwas stilisiert skizziert. Tatsächlich kann es beispielsweise die Form eines Peltonrades haben. Wichtig ist, dass es entlang seines Umfanges mit Schaufeln versehen ist, deren Schaufelflächen entgegengesetzt zur bestimmungsgemäßen Laufrichtung des Schaufelrades hinweisen.

Der Zuflusskanal 202 ist im Bereich seiner Einmündung zur Turbinenkammer 203 hin als verengtes Kanalstück 215 ausgebildet, welches so ausgerichtet ist, dass seine Verlängerung in die Turbinenkammer 203 hinein etwa tangential zur Umfangsrichtung des Schaufelrades 205 an offenen Flächen der Schaufeln des Schaufelrades 205 trifft, sodass also Flüssigkeit welche durch das Kanalstück 215 in die Turbinenkammer 203 strömt das Schaufelrad zu Drehung antreibt, welche in der Ansicht gemäß Fig. 3 gegen den Uhrzeigersinn ausgerichtet ist. In Drehrichtung des Schaufelrades nach der Einmündung des Kanalstücks 215 in die Turbinenkammer 203 ist die Turbinenkammer 203 zum Abflusskanal 204 hin offen, sodass dort Flüssigkeit die Turbinenkammer 203 wieder verlassen kann.

Eine Seitenwand des Kanalstücks 215 ist durch eine als gerade Bohrung ausgeführte Öffnung, welche etwa normal zur Längsrichtung des Kanalstücks 215 ausgerichtet ist, durchbrochen. Linear geführt durch die Mantelfläche der Bohrung ist aus der Bohrung heraus ein Steuerkörper 206 im Wesentlichen quer zur Ausrichtung des Kanalstücks 215 in dieses hinein verschiebbar. Durch Verschiebung des Steuerkörpers 206 aus besagter Bohrung heraus in das Kanalstück 215 hinein ist die Fließquerschnittsfläche im Kanalstück 215 zwischen Wänden des Kanalstücks 215 und dem Steuerkörper 206 verengbar. Bei gegebenem Fluss wird damit durch Hineinschieben des Steuerkörpers 206 in das Kanalstück 215 die Fließgeschwindigkeit in dem an den Steuerkörper 206 angrenzenden Bereich des Kanalstücks 215 und in dem darauf folgenden Längsbereich des Kanalstücks 215 und am angrenzenden Bereich der Turbinenkammer 203 erhöht. Mit dem Erhöhen der Fließgeschwindigkeit wird bestimmungsgemäß der Impuls der fließenden Flüssigkeit bezogen auf den Fluss und damit die Antriebskraft auf das Schaufelrad 205 bezogen auf den Fluss erhöht.

Verschiebebewegung des Steuerkörpers 206 ist durch einen zweiseitigen Steuerkolben 207 angetrieben, mit welchem der Steuerkörper 206 derart verbunden ist, dass er zu diesem eine Kolbenstange und Linearführung bildet. Der Steuerkolben 207 ist in einer Zylinderkammer 212 im Gehäuse 1 verschiebbar angeordnet. Durch den Steuerkolben 207 und durch Rollmembranen 208, 209, welche mit dem Steuerkolben 207 zusammenwirken ist die Zylinderkammer 212 in drei Teilkammern aufgeteilt.

Jene Teilkammer, welche sich an der vom Steuerkörper 206 abgewandt liegenden Stirnseite des Steuerkolbens 207 befindet, ist über eine Leitung 211 mit der Turbinenkammer 203 verbunden. Über diese Leitung 211 liegt jener Druck an der vom Steuerkörper 206 abgewandten Kolbenseite an, welchen die durch die Turbine strömende Flüssigkeit hat, nachdem sie in die Turbinenkammer 203 hinein geströmt und an das Schaufelrad 205 angeprallt ist.

Jene Teilkammer, welcher sich an der dem Steuerkörper 206 zugewandt liegenden Stirnseite des Steuerkolbens 207 befindet, ist über eine Leitung 210 mit einer Stelle des Zuflusskanals 202 verbunden, welche bezüglich der Fließrichtung der darin strömenden Flüssigkeit stromaufwärts vor jener Stelle liegt, an welcher der Steuerkörper 206 an den Zuflusskanal 202 ragt. Über die Leitung 210 liegt also jener Druck der Flüssigkeit im Zuflusskanal an der dem Steuerkörper 206 zugewandten Stirnseite des Steuerkolbens 207 an, den die Flüssigkeit stromaufwärts von der in ihrer Weite durch den Steuerkörper 206 beeinflussbaren Engstelle hat.

Der dritte Teil-Hohlraum ist ringförmig um die Mantelfläche des Steuerkolbens 207 herum ausgebildet und befindet sich in Axialrichtung des Steuerkolbens 207 zwischen den beiden zuvor erwähnten Teil-Hohlräumen. Bevorzugt ist er mit der umgebenden Luft verbunden.

Die Abdichtung der Mantelfläche des Steuerkolbens 207 gegenüber den Stirnflächen der Zylinderkammer 212 erfolgt bevorzugt mittels Rollmembranen 208, 209 welche jeweils ihrem mittleren Flächenteil an jeweils einer Kolbenstirnseite anliegen und mit dem Randbereich ihrer Fläche an jeweils einer Stirnfläche der Zylinderkammer 212. Der wesentliche Vorteil der Rollmembranen 208, 209 gegenüber Bauweisen ohne diese ist, dass eine sehr zuverlässige, sehr dichte Abdichtung zwischen den beiden Räumen an den Stirnseiten des Steuerkolbens 207 möglich ist, ohne dass es deswegen zwangsweise zu hoher Reibung zwischen Steuerkolben 207 und Wänden der Zylinderkammer 212 kommt. Derartige Reibung würde das sensible, kontinuierliche und nicht ruckartige Verschieben des Steuerkolbens 207 und damit des Steuerkörpers 206 in Abhängigkeit von Druckunterschieden zwischen den beiden Kolbenseiten massiv behindern.

Wenn bei gleichbleibendem Druck im Zuflusskanal 202 der Druck in der Turbinenkammer 203 erhöht wird - was am Anwendungsfall "Brauchwassererwärmung" dann der Fall ist, wenn Abfluss aus der Turbinenkammer und damit Fluss durch die Turbinenkammer gebremst wird - steigt der Druck an der vom Steuerkörper 206 abgewandten Stirnseite des Steuerkolbens 207 und der Steuerkolben 207 und mit diesem der Steuerkörper 206 wird auf den Kanal 202 zu verschoben, sodass durch den Steuerkörper 206 das enge Kanalstück 215 des Zuflusskanals 202 weiter verengt wird und wodurch die Fließgeschwindigkeit an der Engstelle bezogen auf den Fluss vergrößert wird.

Indem der Steuerkörper 206 nur mit einem sehr kleinen Flächenbereich mit dem Fluss in Berührung kommt und indem die Richtung in welcher er verschiebbar ist, zur Richtung des Flusses im Zuflusskanal eine relativ stumpfen Winkel einschließt (bevorzugt stumpfer als 45°) übt die am Steuerkörper fließende Flüssigkeit auch dann wenn sie sehr schnell fließt unmittelbar kaum Kraft auf den Steuerkörper aus durch welche dieser verschoben werden könnte. Damit ist die Wirkung des Steuerkolbens 207 für die Positionierung des Steuerkörpers 6 stark dominierend und es ergibt sich eine sehr gute ruckfreie Verschiebbarkeit des Steuerkörpers 206.

Bevorzugt ist die vom Steuerkörper 206 abgewandt liegende wirksame Kolbenfläche des Steuerkolbens 207 (- also die durch Projektion der Kolbenfläche in die zur Bewegungsrichtung des Kolbens normal liegende Ebene abgedeckte Fläche -) größer als die dem Steuerkörper 206 zugewandte wirksame Kolbenfläche - und zwar um mehr als die Querschnittsfläche der Kolbenstange (welche im dargestellten Beispiel durch den Steuerkörper 206 gebildet ist). Damit ist erreichbar, dass auch sehr kleine Druckveränderungen in der Turbinenkammer 203 eine Verschiebung des Steuerkolbens 207 und damit des Steuerkörpers 206 bewirken, womit die gewünschte Steuerungsfunktion sehr sensibel wird und auch bei kleinsten Flüssen gut funktioniert.

## Patentansprüche

1. Anlage für das Erwärmen von Brauchwasser und Bereitstellen von warmem Brauchwasser, wobei die Anlage die folgenden Teile umfasst:
- einen Wasserhahn (4) für die Entnahme von warmem Brauchwasser aus einer Brauchwasserleitung,
- einen Wärmetauscher (3) durch welchen sowohl zu erwärmendes Brauchwasser als auch Wärmeträgerflüssigkeit eines Pufferkreislaufes geführt wird und welcher dazu dient, Wärme von der Wärmeträgerflüssigkeit des Pufferkreislaufes auf das Brauchwasser zu übertragen,
- eine in die Brauchwasserleitung eingesetzte Turbine (2) welche durch das zum Wasserhahn (4) fließende Brauchwasser antreibbar ist,
- eine Pumpe (6), welche durch die Turbine (2) antreibbar ist und dazu dient, die Wärmeträgerflüssigkeit im Pufferkreislauf zu bewegen,
- einen Pufferwärmespeicher (8), durch den der Pufferkreislauf hindurch geführt wird, **dadurch gekennzeichnet, dass** die Anlage ein Ventil (12) umfasst, welches dazu dient, bei ausgeschalteter Pumpe (6) Fluss der Wärmeträgerflüssigkeit im Pufferkreislauf zu stoppen, wobei der Öffnungszustandes des Ventils (12) von dem an einem Steuereingang des Ventils (12) anliegenden Druck abhängig ist und dass an dem Steuereingang Druck der Brauchwasserleitung anliegt und zwar von einem solchen Leitungsbereich, welcher stromabwärts von jener Stelle liegt an welcher bei fließendem Brauchwasser an der Turbine (2) Druckabbau stattfindet.

2. Anlage nach Anspruch 1, **dadurch gekennzeichnet, dass** das Ventil (12) einen geführt bewegbaren Ventildeckel (24) aufweist, welcher durch den Druck, der in der Brauchwasserleitung an einer vom Druckabfall an der Turbine stromabwärts liegenden Stelle herrscht und an den Steuereingang des Ventils (12) angelegt ist, gegen den Rand einer Durchtrittsöffnung (22) im Ventil (12) andrückbar ist.

3. Anlage nach Anspruch 2, **dadurch gekennzeichnet, dass** auf den Ventildeckel (24) zumindest mittelbar eine vorgespannte elastische Feder (27) eine Kraft ausübt, die bei Abwesenheit anderer Kräfte den Ventildeckel von der Durchtrittsöffnung (22) weg bewegt.

4. Anlage nach Anspruch 2, **dadurch gekennzeichnet, dass** der Ventildeckel (24) durch den Druck der in der Brauchwasserleitung an einer bezüglich des Druckabfalls an der Turbine stromaufwärts liegenden Stelle herrscht und an einen weiteren Steuereingang des Ventils angelegt ist, vom Rand einer Durchtrittsöffnung im Ventil weg bewegbar ist.

5. Anlage nach einem der Ansprüche 1 bis 4, **dadurch gekennzeichnet, dass** die Turbine (2) eine Steuervorrichtung aufweist, durch welche der Fließquerschnitt für das die Turbine durchströmende Brauchwasser verengt wird, wenn der Fluss des durchströmenden Brauchwassers verkleinert wird.

6. Anlage nach Anspruch 5, **dadurch gekennzeichnet, dass** die Turbine (2) ein in der Turbinenkammer (203) gelagertes Schaufelrad (206) aufweist, wobei ein Steuerkörper (206) seitlich in den Fließquerschnitt des Zuflusskanals (202) der Turbinenkammer (206) einschiebbar ist.

7. Vorrichtung nach Anspruch 6, **dadurch gekennzeichnet, dass** die Steuervorrichtung einen zweiseitigen Steuerkolben (207) aufweist und eine Zylinderkammer (212), in welcher der Steuerkolben (207) verschiebbar ist, wobei der Steuerkörper (206) mit einer Seite des Steuerkolbens (207) verbunden und mit diesem verschiebbar ist, wobei an der dem Steuerkörper (206) zugewandten Kolbenseite der Druck des flüssigen Mediums im Zuflusskanal (202) vor dem Passieren des Steuerkörpers (206) anliegt und wobei an der vom Steuerkörper (206) abgewandten Kolbenseite der Druck des flüssigen Mediums nach dem Eintritt in die Turbinenkammer (203) anliegt.

8. Vorrichtung nach Anspruch 7, **dadurch gekennzeichnet, dass** die an unterschiedlichen Stirnseiten des Steuerkolbens (207) liegenden Teilkammern der Zylinderkammer (212) durch eine Rollmembran (208, 209) voneinander getrennt sind.

9. Vorrichtung nach Anspruch 8, **dadurch gekennzeichnet, dass** an den beiden Stirnseiten des Steuerkolbens (207) jeweils eine andere Rollmembran (208, 209) anliegt und dass zwischen den beiden Rollmembranen eine dritte Teilkammer der Zylinderkammer (212) liegt.

10. Vorrichtung nach einem der Ansprüche 7 bis 9, **dadurch gekennzeichnet, dass** die vom Steuerkörper (206) abgewandt liegende wirksame Kolbenfläche um mehr als die Querschnittsfläche des Steuerkörpers (206) größer ist als die dem Steuerkörper (206) zugewandt liegende wirksame Kolbenfläche.

## Claims

1. System for heating piped water and providing hot piped water, whereby the system encompasses the following parts:
- a tap (4) for providing hot piped water from a water line,
- a heat exchanger (3) through which the piped water to be heated as well as heat transfer fluid of a thermal energy cycle are led, and which serves to transfer heat from the thermal energy cycle's heat transfer fluid to the piped water,
- a turbine (2) inserted into the water line, which is driven by the piped water flowing to the tap (4),
- a pump (6) which is driven by the turbine (2) and serves to move the heat transfer fluid in the thermal energy cycle,
- a thermal energy storage tank (8) through which the thermal energy cycle is led,
**characterised in that** the system includes a valve (12) which stops the flow of the heat transfer fluid in the thermal energy cycle if the pump (6) is turned off, whereby the opening state of the valve (12) depends on pressure that is applied to its actuator line, and **in that** pressure from the water line is applied to the actuator line of the valve (12) from an line section of the water line which lies downstream from the position where pressure reduction in the piped water takes place when it flows through the turbine (2).

2. A system according to claim 1, **characterised in that** the valve (12) has a guided movable valve disc (24), which can be pressed against the seat of an opening (22) in the valve (12) by applying pressure that exists in the water pipe at a position lying downstream from the location of pressure reduction in the turbine to the actuator line of the valve (12) .

3. A system according to claim 2, **characterised in that** one preloaded flexible spring (27) exerts at least indirectly a force on the valve disc (24) which moves the valve disc (24) away from the opening (22) in the absence of other forces.

4. A system according to claim 2, **characterised in that** the valve disc (24) can be moved away from the seat of the opening (22) in the valve (12) by applying the pressure that exists in the water pipe, in a position lying upstream in regard to the pressure reduction in the turbine (2) to another actuator line of the valve.

5. A system according to one of the claims 1 to 4, **characterised in that** the turbine (2) has a control device which constricts the flow cross section for the piped water flowing through the turbine (2) if the flow of the piped water is decreased.

6. A system according to claim 5, **characterised in that** the turbine (2) has a bucket wheel (206) located in the turbine housing (203), whereby a control body (206) can be laterally inserted into the flow cross section of the influx channel (202) of the turbine housing (206).

7. A device according to claim 6, **characterised in that** the control device has a two-sided control piston (207) and a cylindrical chamber (212), in which the control piston (207) can be moved, whereby the control body (206) is attached to one side of the control piston (207) and can be moved by it, whereby the pressure of the liquid medium in the influx channel (202) upstream of the control body (206) is applied to the piston side turned towards the control body (206) and whereby the pressure of the liquid medium, which it has after the liquid medium enters the turbine housing (203) is applied to the piston side turned away from the control body (206).

8. A device according to claim 7, **characterised in that** the sections of the cylindrical chamber (212) located at the different front sides of the control piston (207) are separated from each other by a roller diaphragm (208, 209).

9. A device according to claim 8, **characterised in that** there is a roller diaphragm (208, 209) next to each of both front sides of the control piston (207) such that a third section of the cylindrical chamber (212) is located between the two roller diaphragms.

10. A device according to one of the claims 7 to 9, **characterised in that** the effective piston surface lying turned away from the control body (206) is larger than the effective piston surface turned toward the control body (206) by more than the cross-sectional area of the control body (206).

## Revendications

1. Équipement pour le réchauffement d'eau sanitaire et la mise à disposition d'eau chaude sanitaire, le dispositif se composant des éléments suivantes :
- un robinet (4) pour la distribution d'eau chaude sanitaire depuis une canalisation d'eau sanitaire,
- un échangeur thermique (3) à travers lequel circulent à la fois l'eau sanitaire à chauffer et également le fluide caloporteur d'un circuit-tampon et qui sert à transmettre la chaleur du fluide caloporteur du circuit-tampon à l'eau sanitaire,
- une turbine (2) placée dans la canalisation d'eau sanitaire entrainée par l'eau sanitaire coulant par le robinet (4),
- une pompe (6) entrainée par la turbine (2) et servant à déplacer le fluide caloporteur dans le circuit-tampon,
- un accumulateur thermique (8) au travers duquel le circuit-tampon circule,
**caractérisé en ce que** l'équipement comprend une vanne (12) servant à stopper le débit du fluide caloporteur dans le circuit-tampon lorsque la pompe (6) est éteinte, l'état d'ouverture de la vanne (12) dépendant de la pression présente sur une entrée de commande de la vanne (12) et de la présence de la pression de la canalisation d'eau sanitaire à l'entrée de commande et notamment d'une telle zone de canalisation se situant en aval de la position sur laquelle a lieu la réduction de pression sur la turbine (2) lorsque l'eau sanitaire circule.

2. Équipement selon revendication 1, **caractérisé en ce que** la vanne (12) présente un couvercle de vanne (24) mobile, qui par la pression dominant dans la canalisation d'eau sanitaire à un endroit se situant en aval de la chute de pression sur la turbine et placée sur l'entrée de commande de la vanne (12), peut être compressé contre la paroi d'une ouverture d'échappement (22) dans la vanne (12).

3. Équipement selon revendication 2, **caractérisé en ce qu'**un ressort (27) précontraint élastique exerce au moins indirectement sur le couvercle de vanne (24) une force qui en l'absence d'autres forces, repousse le couvercle de vanne de l'ouverture d'échappement (22).

4. Équipement selon revendication 2, **caractérisé en ce que** le couvercle de vanne (24), par la pression dominant dans la canalisation d'eau sanitaire à un endroit se situant en aval de la chute de pression sur la turbine et placée sur une autre entrée de commande de la vanne, est repoussé de la paroi d'une ouverture d'échappement dans la vanne.

5. Équipement selon l'une des revendications 1 à 4, **caractérisé en ce que** la turbine (2) présentant un dispositif de commande qui rétrécit la section d'écoulement de l'eau sanitaire circulant à travers la turbine, lorsque le débit de l'eau circulant est réduit.

6. Équipement selon revendication 5, **caractérisé en ce que** la turbine (2) présente un rotor (206) placé dans la chambre de turbine (203), un corps de commande (206) étant insérable latéralement dans la section d'écoulement du canal d'amenée (202) de la chambre de turbine (206).

7. Dispositif selon revendication 6, **caractérisé en ce que** le dispositif de commande présente un piston de commande (207) bilatéral et une chambre de cylindre (212) dans laquelle le piston de commande (207) déplace, le corps de commande (206) étant relié à un côté du piston de commande (207) et pouvant déplacer avec celui-ci, la pression du fluide sur le côté piston face au corps de commande (206) se situant dans le canal d'amenée (202) avant de passer le corps de commande (206) et la pression du fluide se situant sur le côté piston opposé au corps de commande (206) après l'entrée dans la chambre de turbine (203).

8. Dispositif selon revendication 7, **caractérisé en ce que** les compartiments de la chambre de vérin (212) se situant sur les différentes faces avant du piston de commande (207) sont séparés les uns des autres par une membrane de roulement (208, 209) .

9. Dispositif selon revendication 8, **caractérisé en ce que** sur les deux faces avant du piston de commande (207) se situe respectivement une autre membrane de roulement (208, 209) et qu'entre les deux membranes de roulement se situe un troisième compartiment de la chambre de cylindre (212).

10. Dispositif selon l'une des revendications 7 à 9, **caractérisé en ce que** la surface de piston effective se situant à l'opposé du corps de commande (206) est plus grande de la surface de section du corps de commande (206) que la surface de piston effective face au corps de commande (206).
